# EUROPEAN PATENT SPECIFICATION

(11) **EP 3 708 396 B1**
(45) Date of publication and mention of the grant of the patent: **10.04.2024**
(21) Application number: 18873909.8
(22) Date of filing: 02.11.2018
(51) Int. Cl.: B60H 1/34, B60H 1/00

(54) **AIR CONDITIONER AIR OUTLET STRUCTURE**
LUFTAUSLASSSTRUKTUR EINER KLIMAANLAGE
STRUCTURE DE SORTIE D'AIR D'UN CLIMATISEUR

(30) Priority: 06.11.2017 CN 201711079735
(43) Date of publication of application: 16.09.2020
(73) Proprietor: NIO (Anhui) Holding Co., Ltd., Hefei City, Anhui Province (CN)
(72) Inventor: LI, Haiying, Jiading Shanghai (CN)
(74) Representative: Vossius & Partner Patentanwälte Rechtsanwälte mbB
(86) International application number: PCT/CN2018/113788
(87) International publication number: WO 2019/086006

(56) References cited:
- CN-A- 103 398 459
- CN-A- 104 325 989
- CN-U- 207 433 200
- CN-Y- 201 201 496
- GB-A- 1 040 469
- JP-A- 2005 255 000
- KR-A- 20090 106 205
- US-A1- 2004 089 007
- US-B1- 6 616 523

## Description

### Field of the Invention

The present invention relates to an air-conditioning air outlet structure, in particular to an air-conditioning air outlet structure capable of discharging air within a large range.

### Background of the Invention

At present, air-conditioning air outlets in vehicles are generally centralized, and the air-conditioning air outlets are relatively small, except for the air outlets, most of the other areas in the vehicles are interior structures. This arrangement mode leads to centralized air-out of air conditioners, such that the temperatures in the vehicles are not uniform, especially when the air conditioners are refrigerating, the cold wind directly blows on the bodies of passengers, which causes discomfort and severely causes pain on locations such as joints.

US2004/089007 A1 relates to a ceiling air-blowing device for vehicle air conditioning. A ceiling wall is provided along a ceiling portion of the vehicle to define an air passage so that air from an air conditioner unit is introduced into the air passage through a pillar duct. The ceiling wall is formed with a plurality of holes having openings on a lower surface of the ceiling wall, so that the air in the air passage is blown off into the passenger compartment through the holes. Further, the holes are formed such that a total area of the openings of the holes per unit area at a positon that is proximate to the end of the duct is smaller than that at a second position that is farther from the end of the duct than the first position. Therefore, the air is uniformly blown into the passenger compartment over a wide range of the vehicle.

JP 2005 255000 A discloses an air conditioner for a vehicle, a blow out port for blowing out air-conditioned air from air-conditioning unit is formed on an upper surface part of the hollow arm rest for putting the occupant's arm. Thereby, the air-conditioned air (cool air, warm air or the like) can be fed toward the occupant's arm put on the upper surface part of the arm rest.

GB 1 040 469 A discloses automobile bodies provided with devices for delivering conditioned air into the passenger compartment. A windshield is secured at its bottom to a cross member. A wall of a chamber is opposite the wall and is also fixed at its opposite edges to the cross member and to the instrument board so as to define with the wall the chamber of tubular cross-sectional shape. The wall is perforated with a plurality of orifices, disposed over the whole surface of the wall surface, and acting as outlets for the conditioned air.

### Summary of the Invention

The purpose of the present invention is to overcome the problems existing in the existing air-conditioning air outlet structure, and to provide an air-conditioning air outlet structure capable of discharging air within a large range. The technical problem to be solved is to provide an air-conditioning air outlet structure improving the problem of uneven temperature, preferably in a vehicle, caused by the centralized arrangement of air-conditioning air outlets and the smaller sizes of the air outlets, so that the air-conditioning air outlets discharge air within a large range, in this way, the temperature, preferably in the vehicle, is more uniform, and the human body feels more comfortable.

The purpose of the present invention and the technical problem to be solved are achieved by the features of claim 1. Preferred embodiments are further specified in the dependent claims. An air-conditioning air outlet structure according to the present invention includes: a shell, wherein the shell includes a panel and a side plate, the panel serves as an interior trim part, and pinhole type air outlets, wherein a plurality of pinhole type air outlets are provided and are distributed on the panel of the shell.

Preferably, the air-conditioning air outlet structure further includes an air-conditioning air duct, and the air-conditioning air duct communicates with the inner cavity of the shell.

According to another embodiment, the pinhole type air outlets constitute an air outlet surface of the panel, and the closer the air outlet surface is to the air-conditioning air duct, the smaller the unit air outlet area is.

Preferably, the pinhole type air outlets are relatively sparsely distributed at positions near the air-conditioning air duct and are relatively densely distributed at positions far from the air-conditioning air duct.

According to the present invention, the air-conditioning air outlet structure includes an a plurality of wind speed accelerators, wherein a plurality of wind speed accelerators are installed at places where the wind speeds are relatively small in the shell for controlling the air volume, and are installed at corners in the shell for controlling the wind direction.

According to another embodiment, the air-conditioning air duct is fixed on a vehicle body.

Preferably, an air-conditioning switching valve is arranged in the air-conditioning air duct for controlling the opening and closing of the air-conditioning air duct.

According to the present invention, an air duct partition plate is fixed on the inner side of the panel for guiding and controlling the wind direction. Preferably, the air duct partition plate is installed on the panel through bolts or a rotating shaft.

Preferably, a signal collection unit is arranged on the air duct partition plate.

Preferably, wind speed sensors are respectively arranged at different positions in the shell.

Preferably, the shell is further provided with a bottom plate, and a sealed cavity is formed in the shell.

By means of the above technical solutions, the present invention at least has the following advantages and beneficial effects:
(1) The air-conditioning air outlet structure of the present invention includes the shell and the pinhole type outlets, the shell includes the panel and the side plate, a plurality of pinhole type air outlets are provided and are distributed on the panel of the shell, the shell can be fixed on a ceiling or side wall of a vehicle body, the panel replaces an interior trim part of the vehicle body in a large range, large-area air-out is achieved on the shell, so that the temperature in a vehicle can be more uniform, and the human body feels more comfortable.
(2) In the air-conditioning air outlet structure of the present invention, the pinhole type air outlets are relatively sparsely distributed at positions near the air-conditioning air duct and are relatively densely distributed at positions far from the air-conditioning air duct, thereby reducing the difference in the air output at different positions of the shell, and the temperature in a vehicle can be more uniform as a result.
(3) The air-conditioning air outlet structure of the present invention includes the wind speed accelerators, the plurality of wind speed accelerators are installed at the corners of the shell and at places where the wind speeds are relatively small, and by arranging the wind speed accelerators at places where the wind speeds are relatively small, the differences between the wind speeds and wind directions at different positions in the shell are reduced, and the temperature in a vehicle can be more uniform as a result.
(4) In the air-conditioning air outlet structure of the present invention, the air duct partition plate is fixed on the inner side of the panel, and the air duct partition plate is used for guiding the flow direction of the wind, so that the temperature in a vehicle can be more uniform.

The above description is only an overview of the technical solutions of the present invention. In order to understand the technical means of the present invention more clearly, the present invention can be implemented in accordance with the contents of the specification, and in order to make the above purpose, features and advantages of the present invention more obvious and understandable, preferred embodiments are listed below and are descried in detail below in combination with drawings.

### Brief Description of the Drawings

Fig. 1 is a schematic diagram of a plane structure of an air-conditioning air outlet structure of the present invention;
Fig. 2 is a schematic diagram of a mounting structure of the air-conditioning air outlet structure of the present invention;
Fig. 3 is a schematic diagram of an internal structure of the air-conditioning air outlet structure of the present invention.

### Reference Signs:

| | | | |
|---|---|---|---|
| 10: | shell | 20: | air-conditioning air duct |
| 11: | pinhole type air outlet | 30: | vehicle body metal plate |
| 12: | panel | | |
| 13: | wind speed accelerator | | |
| 14: | air duct partition plate | | |
| 15: | side plate | | |
| 16: | mounting structure | | |

### Detailed Description of the Embodiments

In order to further illustrate the technical means and effects adopted in the present invention to achieve the intended purpose of the invention, specific embodiments, features and effects of an air-conditioning air outlet structure proposed in accordance with the present invention are described in detail below, in conjunction with the drawings and preferred embodiments.

The air-conditioning air outlet structure of the present invention is not limited to be applied to vehicles, but can be applied to any equipment or building on which the air outlet of the air conditioner needs to be installed.

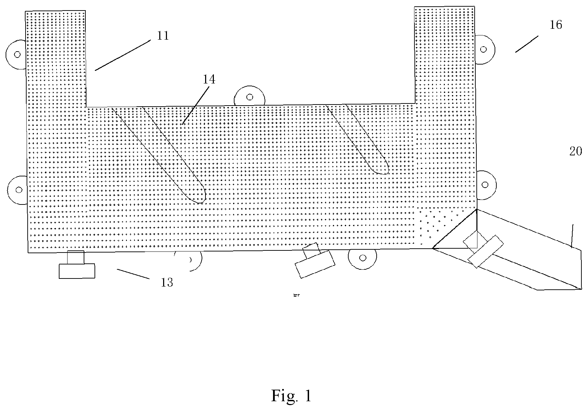

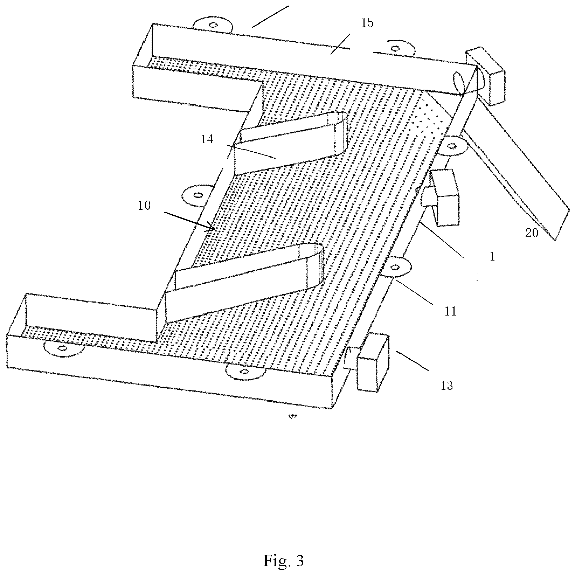

Please refer to Fig. 1, Fig. 2 and Fig. 3, the air-conditioning air outlet structure of the present invention includes a shell 10 and pinhole-type air outlets 11, the shell 10 includes a panel 12 and a side plate 15, the side plate 15 forms the shape of a closed ring, when the shell 10 is installed on the top or side wall of a vehicle body, the shell 10 and the top or side wall of the vehicle body form an enclosed space, a plurality of pinhole-type air outlets 11 are provided and are distributed on the panel 12 of the shell 10, the size of the diameter of each pinhole-type air outlet 11 is adjusted according to actual needs, the panel 12 can replace the interior structure of the ceiling part or the interior structure of the side wall of the vehicle body except for the skylight, and can replace the interior trim parts within a large range, so that large-area air-out is realized, the temperature in the vehicle is more uniform, and the human body feels more comfortable.

In one embodiment, the air-conditioning air outlet structure further includes an air-conditioning air duct 20, and the air-conditioning air duct 20 communicates with the inner cavity of the shell 10, the air-conditioning air duct 20 is installed on a lateral C-pillar of the vehicle body, an air-conditioning switching valve is arranged in the air-conditioning air duct 20, an air-conditioning switch can be mechanically or electronically controlled, after the air-conditioning switching valve in the air-conditioning air duct 20 is opened, the air volume flows into the shell 10 and flows out from the pinhole type air outlets 11.

In one embodiment, the total areas of the pinhole type air outlets 11 are smaller at positions near the air-conditioning duct 20 and are greater at positions far from the air-conditioning duct 20, specifically, the pinhole type air outlets 11 are relatively sparsely distributed at positions near the main air duct and are relatively densely distributed at positions far from the main air duct, that is to say, the area of a single pinhole type air outlet 11 at the position near the main air duct is greater, and the area of a single pinhole type air outlet 11 at the position far from the main air duct is smaller, so that the air volume distribution is more uniform, an air duct partition plate 14 is fixed on the inner side of the panel 12, when the shell 10 is installed on the top or side wall of the vehicle body, the air duct partition plate 14 and the top or side wall of the vehicle body seal each other, no pinhole type air outlet 11 is formed in the area of the air duct partition plate 14, the air duct partition plate 14 is used for guiding and controlling the flow direction of wind, and a signal collection unit is arranged on the air duct partition plate 14 for collecting signals to be collected such as wind speed, wind direction or temperature or the like. A plurality of wind speed accelerators 13 are installed in the shell 10, the wind directions of the wind speed accelerators 13 are set as required, the air duct partition plate 14 and the wind speed accelerators 13 cooperate with each other, the wind speed accelerators 13 installed at the corners are used for controlling the wind direction, at the positions far from the air conditioning air duct 20, the wind speed is smaller, and the wind speed accelerators 13 installed at the positions where the wind speed is smaller are used for controlling the air volume, so that the air-out at different positions of the shell 10 is uniform.

Specifically, the air duct partition plate 14 can be installed on the panel 12 through bolts. In addition, the air duct partition plate 14 can also be integrally formed with the panel 12, or, the air duct partition plate 14 can be installed on the panel 12 through a rotating shaft.

In one embodiment, air speed sensors are respectively arranged at the air outlets of the wind speed accelerators 13 in the shell 10, at the top end of the air duct partition plate 14, at positions far from the air conditioning air duct 20 in the shell, and in the middle area of the shell 10, so as to collect the wind speeds at different positions in the shell 10.

In one embodiment, the bottom of the side plate 15 of the shell 10 is used for connecting with the top or side wall of the vehicle body, a sealing device is arranged between the side plate 15 and the top or side wall of the vehicle body to avoid air leakage, or, the shell 10 is further provided with a bottom plate, and the panel 12, the side plate 15 and the bottom plate form a sealed shell to avoid air leakage.

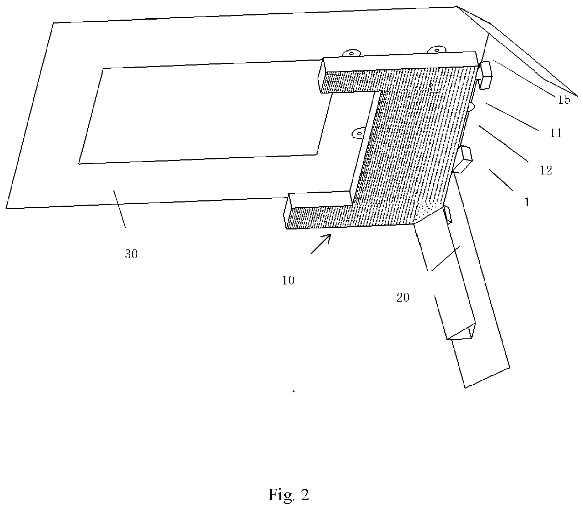

As shown in Fig. 2, a plurality of mounting structures 16 are arranged on the side plate 15 of the shell 10, the air-conditioning air outlet structure of the present invention is installed on a vehicle body metal plate 30 through the plurality of mounting structures 16 to replace the interior structure of the ceiling part or the interior structure of the side wall of the vehicle body except for the skylight, and interior structures are still arranged at positions that cannot be replaced by the interior trim parts in the vehicle body.

The above descriptions are only the preferred embodiments of the present invention, and do not limit the present invention in any form. Although the present invention has been disclosed in the preferred embodiments as above, the preferred embodiments are not used for limiting the present invention, anyone skilled familiar with this art can make some changes or modifications by using the technical contents disclosed above to serve as equivalent embodiments of equivalent changes, without departing from the scope of the technical solutions of the present invention as defined by the appended claims.

## Claims

1. An air-conditioning air outlet structure, comprising: a shell (10), wherein the shell (10) comprises a panel (12) and a side plate (15), the panel (12) serves as an interior trim part, and pinhole type air outlets (11), wherein a plurality of pinhole type air outlets (11) are provided and are distributed on the panel (12) of the shell (10), **characterized in that** the air-conditioning air outlet structure further comprises a plurality of wind speed accelerators (13), wherein a plurality of wind speed accelerators (13) are installed at places where the wind speeds are relatively small in the shell (10) for controlling the air volume, and are installed at corners in the shell (10) for controlling the wind direction, the wind speed accelerators (13) cooperate with an air duct partition plate (14) which is fixed on the inner side of the panel (12) for guiding and controlling the wind direction.

2. The air-conditioning air outlet structure according to claim 1, further comprising:
an air-conditioning air duct (20), wherein the air-conditioning air duct (20) communicates with the inner cavity of the shell (10).

3. The air-conditioning air outlet structure according to claim 2, wherein:
the pinhole type air outlets (11) are relatively sparsely distributed at positions near the air-conditioning air duct (20) and are relatively densely distributed at positions far from the air-conditioning air duct (20).

4. The air-conditioning air outlet structure according to claim 2, wherein:
an air-conditioning switching valve is arranged in the air-conditioning air duct (20) for controlling the opening and closing of the air-conditioning air duct (20).

5. The air-conditioning air outlet structure according to claim 1, wherein:
the air duct partition plate (14) is installed on the panel (12) through bolts or a rotating shaft.

6. The air-conditioning air outlet structure according to claim 5, wherein a signal collection unit is arranged on the air duct partition plate (14).

7. The air-conditioning air outlet structure according to claim 1, wherein:
wind speed sensors are respectively arranged at different positions in the shell (10).

8. The air-conditioning air outlet structure according to claim 1, wherein:
the shell (10) is further provided with a bottom plate, and a sealed cavity is formed in the shell (10).

## Patentansprüche

1. Klimaanlagen-Luftauslassstruktur, aufweisend: ein Gehäuse (10), wobei das Gehäuse (10) eine Platte (12) und eine Seitenplatte (15), wobei die Platte (12) als ein Innenverkleidungsteil dient, und Luftauslässe (11) vom Nadellochtyp umfasst, wobei mehrere Luftauslässe (11) vom Nadellochtyp vorgesehen sind und auf der Platte (12) des Gehäuses (10) verteilt sind, **dadurch gekennzeichnet, dass** die Klimaanlagen-Luftauslassstruktur ferner mehrere Windgeschwindigkeitsbeschleuniger (13) aufweist, wobei mehrere Windgeschwindigkeitsbeschleuniger (13) in dem Gehäuse (10) an Stellen installiert sind, an denen die Windgeschwindigkeiten relativ gering sind, um das Luftvolumen zu steuern, und in dem Gehäuse (10) in Ecken installiert sind, um die Windrichtung zu steuern, wobei die Windgeschwindigkeitsbeschleuniger (13) mit einer Luftkanal-Trennplatte (14) zusammenwirken, die an der Innenseite der Platte (12) befestigt ist, um die Windrichtung zu führen und zu steuern.

2. Klimaanlagen-Luftauslassstruktur nach Anspruch 1, zusätzlich aufweisend:
einen Klimaanlagen-Luftkanal (20), wobei der Klimaanlagen-Luftkanal (20) mit dem inneren Hohlraum des Gehäuses (10) kommuniziert.

3. Klimaanlagen-Luftauslassstruktur nach Anspruch 2, wobei:
die Luftauslässe (11) vom Nadellochtyp an Positionen in der Nähe des Klimaanlagen-Luftkanals (20) relativ dünn verteilt sind und an Positionen, die weit von dem Klimaanlagen-Luftkanal (20) entfernt sind, relativ dicht verteilt sind.

4. Klimaanlagen-Luftauslassstruktur nach Anspruch 2, wobei:
ein Klimaanlagen-Schaltventil in dem Klimaanlagen-Luftkanal (20) angeordnet ist, um das Öffnen und Schließen des Klimaanlagen-Luftkanals (20) zu steuern.

5. Klimaanlagen-Luftauslassstruktur nach Anspruch 1, wobei:
die Luftkanal-Trennplatte (14) durch Bolzen oder eine Drehwelle auf der Platte (12) installiert ist.

6. Klimaanlagen-Luftauslassstruktur nach Anspruch 5, wobei eine Signal-Sammeleinheit auf der Luftkanal-Trennplatte (14) angeordnet ist.

7. Klimaanlagen-Luftauslassstruktur nach Anspruch 1, wobei:
Windgeschwindigkeitssensoren jeweils an unterschiedlichen Positionen in dem Gehäuse (10) angeordnet sind.

8. Klimaanlagen-Luftauslassstruktur nach Anspruch 1, wobei:
das Gehäuse (10) ferner mit einer Bodenplatte versehen ist und in dem Gehäuse (10) ein abgedichteter Hohlraum gebildet ist.

## Revendications

1. Structure de sortie d'air de climatisation, comprenant : une enveloppe (10), dans laquelle l'enveloppe (10) comprend un panneau (12) et une plaque latérale (15), le panneau (12) sert de partie de garniture intérieure, et des sorties d'air en trou d'épingle (11), dans laquelle une pluralité de sorties d'air en trou d'épingle (11) sont fournies et sont réparties sur le panneau (12) de l'enveloppe (10), **caractérisée en ce que**
la structure de sortie d'air de climatisation comprend en outre une pluralité d'accélérateurs de vitesse de vent (13), dans laquelle une pluralité d'accélérateurs de vitesse de vent (13) sont installés au niveau d'endroits où les vitesses de vent sont relativement faibles dans l'enveloppe (10) pour commander le volume d'air, et sont installés au niveau de coins dans l'enveloppe (10) pour commander la direction du vent, les accélérateurs de vitesse de vent (13) coopèrent avec une plaque de séparation de conduit d'air (14) qui est fixée sur le côté interne du panneau (12) pour guider et commander la direction du vent.

2. Structure de sortie d'air de climatisation selon la revendication 1, comprenant en outre :
un conduit d'air de climatisation (20), dans laquelle le conduit d'air de climatisation (20) communique avec la cavité interne de l'enveloppe (10).

3. Structure de sortie d'air de climatisation selon la revendication 2, dans laquelle :
les sorties d'air en trou d'épingle (11) sont réparties de manière relativement peu dense au niveau de positions proches du conduit d'air de climatisation (20) et sont réparties de manière relativement dense au niveau de positions éloignées du conduit d'air de climatisation (20).

4. Structure de sortie d'air de climatisation selon la revendication 2, dans laquelle :
une vanne de commutation de climatisation est agencée dans le conduit d'air de climatisation (20) pour commander l'ouverture et la fermeture du conduit d'air de climatisation (20).

5. Structure de sortie d'air de climatisation selon la revendication 1, dans laquelle :
la plaque de séparation de conduit d'air (14) est installée sur le panneau (12) par l'intermédiaire de boulons ou d'un arbre rotatif.

6. Structure de sortie d'air de climatisation selon la revendication 5, dans laquelle une unité de collecte de signal est agencée sur la plaque de séparation de conduit d'air (14).

7. Structure de sortie d'air de climatisation selon la revendication 1, dans laquelle :
des capteurs de vitesse de vent sont agencés respectivement au niveau de différentes positions dans l'enveloppe (10).

8. Structure de sortie d'air de climatisation selon la revendication 1, dans laquelle :
l'enveloppe (10) est en outre pourvue d'une plaque inférieure, et une cavité scellée est formée dans l'enveloppe (10).
